# FASCICULE DE BREVET EUROPEEN

(11) **EP 0 949 346 B1**
(45) Date de publication et mention de la délivrance du brevet: **30.06.2004**
(21) Numéro de dépôt: 99400820.9
(22) Date de dépôt: 02.04.1999
(51) Int. Cl.: C22C 33/02, C22C 38/22, C21D 1/78, G21C 3/07

(54) **Procédé de fabrication d'un alliage ferritique-martensitique renforce par dispersion d'oxydes**
Verfahren zur Herstellung einer dispersionsgehärteten ferritisch-martensitischen Legierung
Process of producing a dispersion strengthened ferritic-martensitic alloy

(30) Priorité: 07.04.1998 FR 9804325
(43) Date de publication de la demande: 13.10.1999
(73) Titulaire: COMMISSARIAT A L'ENERGIE ATOMIQUE, 75015 Paris Cédex 15 (FR)
(72) Inventeur: Lambard, Véronique, 94240 L'Hay-Les-Roses (FR); Alamo, Ana, 78960 Voisins Le Bretonneux (FR); Seran, Jean-Louis, 91370 Verrieres Le Buisson (FR)
(74) Mandataire: Poulin, Gérard

(56) Documents cités:
- EP-A- 0 258 969
- GB-A- 2 181 454
- GB-A- 2 219 004
- US-A- 4 075 010
- US-A- 4 732 622
- US-A- 4 960 562
- US-A- 5 167 728
- US-A- 5 310 431
- PATENT ABSTRACTS OF JAPAN vol. 012, no. 467 (C-550), 7 décembre 1988 (1988-12-07) & JP 63 186853 A (NKK CORP), 2 août 1988 (1988-08-02)
- PATENT ABSTRACTS OF JAPAN vol. 014, no. 037 (C-680), 24 janvier 1990 (1990-01-24) & JP 01 272746 A (POWER REACTOR & NUCLEAR FUEL DEV CORP;OTHERS: 02), 31 octobre 1989 (1989-10-31)
- PATENT ABSTRACTS OF JAPAN vol. 014, no. 539 (C-0782), 28 novembre 1990 (1990-11-28) & JP 02 225648 A (SUMITOMO METAL IND LTD), 7 septembre 1990 (1990-09-07)
- GRESSINGER G.H.: 'Powder metallurgy of superalloys', 1984, BUTTERWORTH & CO., CAMBRIDGE, GB

## Description

### Domaine technique de l'invention

La présente invention se rapporte à un procédé de fabrication d'un alliage ferritique ou martensitique amélioré incluant du chrome et renforcé par dispersion d'oxydes, couramment appelé alliage ODS ("Oxyde Dispersion Strenghtening"), et plus particulièrement à un procédé de fabrication d'un alliage ferritique ou martensitique ODS à gros grains incluant du chrome, qui présente une matrice monophasée ferritique ou martensitique ayant une microstructure isotrope et une taille moyenne de grain suffisante pour garantir une résistance mécanique compatible avec une utilisation de cet alliage à haute température et/ou sous irradiation neutronique.

Les alliages ODS sont constitués d'une matrice métallique ayant une structure cristalline cubique centrée. Cette structure est renforcée par une dispersion d'oxydes de type Y₂O₃, TiO₂, etc... qui lui confère d'excellentes propriétés mécaniques et chimiques à moyenne et haute températures.

La résistance à l'oxydation de ces alliages est due notamment à la présence de chrome. Cette résistance n'est effective que lorsque la concentration en chrome est supérieure à 8% en poids dans l'alliage. Toutefois, lorsque cette concentration est supérieure à 12% en poids, l'alliage devient fragile.

En outre, ces alliages présentent grâce à leur structure cristalline une bonne résistance au gonflement et au fluage d'irradiation neutronique.

Ces alliages peuvent être utilisés par exemple comme matériaux de structure de composants de coeur d'une centrale nucléaire car ces composants doivent présenter une grande résistance mécanique à température élevée, par exemple de 400 à 700°C, être résistants à des radiations neutroniques, être compatibles avec un usage en milieu sodium, et résistant à l'oxydation, etc...

De manière générale, ces alliages sont aussi utiles pour fabriquer des éléments soumis à de fortes contraintes mécaniques et thermiques, tels que des éléments de centrales thermiques, et des éléments utilisés dans l'industrie du verre, du gaz, ou dans l'aéronautique, etc...

### Art antérieur

Plusieurs types d'alliages ODS incluant du chrome ont déjà été développés dans l'art antérieur. Ceux-ci présentent des concentrations en chrome comprises entre 13 et 20%, des teneurs variables en Mo, W, Al et Ti, et une faible quantité de carbone en général inférieure à 0,02% en poids (200 ppm). Dans ce type d'alliage, la matrice est totalement ferritique quelle que soit la température de traitement thermique.

Ainsi, le brevet américain n°4 075 010 décrit un alliage ayant une composition Fe-14 Cr-1 Ti-0,3 Mo-0,25 Y₂O₃.

Cet alliage montre un très bon compromis résistance/ductilité suivant une direction parallèle à l'axe de façonnage de l'alliage. Cependant, les grains qui le compose sont allongés dans le sens de façonnage, ce qui entraîne une importante anisotropie de ses propriétés mécaniques. Cette anisotropie conduit à une trop faible résistance mécanique selon des directions perpendiculaires à la direction de façonnage. Un tel alliage ne peut donc pas être utilisé par exemple pour constituer des tubes de gaines pour des réacteurs nucléaires, car la direction radiale de ces tubes est la direction de sollicitation mécanique principale dans un réacteur. En outre, cet alliage contient une teneur élevée en chrome, ce qui entraîne sa fragilisation sous irradiation neutronique par précipitation de phases riches en cet élément.

Ce type d'alliage est généralement élaboré par mécanosynthèse ("mechanical alloying") à partir de ses constituants sous forme de poudres élémentaires ou préalliées. Dans ce type d'alliage, la mécanosynthèse est une méthode permettant d'introduire dans la matrice métallique la distribution fine et homogène d'oxydes qui confère à l'alliage une résistance mécanique à chaud très élevée. Les poudres ainsi obtenues sont compactées et filées à température et pression élevées.

Cette méthode d'élaboration produit cependant un alliage dans lequel la taille moyenne de grain est en général trop petite, c'est-à-dire inférieure à 1 µm, et qui présente une microstructure anisotrope lorsque la composition chimique initiale de la matrice implique une structure ferritique. Dans ces conditions, une trop faible taille moyenne de grain entraîne une dégradation de la résistance mécanique de l'alliage, notamment à des températures élevées supérieures à 500°C. De plus, l'anisotropie de taille de grain conduit à une anisotropie des propriétés mécaniques de l'alliage.

La structure ferritique initiale est en particulier inévitable dans les nuances comprenant plus de 12% de chrome.

Pour éviter ces problèmes d'anisotropie, l'homme du métier a été amené à utiliser un matériau martensitique moins riche en Cr, mais dans ce cas, la maîtrise de la taille moyenne de grain s'est avérée impossible. En effet, dans ce type de matériau, aucune variation de la taille de grain n'a été observée après un traitement thermique classique, même à des températures allant jusqu'à 1250°C.

Ainsi, la demande de brevet GB-A-2 219 004 décrit un alliage ODS à matrice martensitique revenue présentant une concentration en chrome de 8 à 12% en poids et des concentrations en (Mo+W) et en carbone comprises respectivement entre 0,1 et 4% en poids et entre 0,05 et 0,25%. En outre, l'alliage décrit est renforcé par une distribution de particules d'oxydes de Y₂O₃ et de TiO₂ à une concentration de 0,1 à 1% en poids. Les exemples d'application décrits dans ce document comprennent une concentration en chrome supérieure à 10% en poids et une concentration en Mo et W comprise entre 2 et 4% en poids. Le procédé de préparation de l'alliage décrit comprend une mécanosynthèse de l'alliage dans une attriteur, un compactage de l'alliage sous vide et un filage à chaud à une température allant de 900 à 1200°C. Ce procédé est suivi d'un traitement de normalisation à une température allant de 950 à 1200°C, et d'un revenu à une température allant de 750 à 820°C.

Mais le procédé décrit ne permet pas de maîtriser la taille des grains de l'alliage.

Les procédés de l'art antérieur présentent donc tous notamment un ou plusieurs des inconvénients suivants :
- ils ne permettent pas d'obtenir une microstructure isotrope de l'alliage formé,
- ils ne permettent pas une maîtrise et un contrôle de la taille de grain de l'alliage,
- ils conduisent à une taille de grain qui reste trop fine.

En conséquence, les alliages de l'art antérieur présentent tous un ou plusieurs des inconvénients suivants :
- une insuffisance de la résistance mécanique de l'alliage à haute température due à une anisotropie de sa microstructure,
- une fragilisation à haute température et/ou sous irradiation neutronique par précipitation de phases fragilisantes dans l'alliage due notamment à un excès de chrome, et
- une résistance mécanique pas toujours compatible avec une utilisation à haute température et/ou sous irradiation neutronique due notamment à une non maîtrise de la taille de grain de l'alliage et à une taille de grain trop petite.

### Exposé de l'invention

La présente invention a précisément pour but de fournir un procédé de fabrication d'un alliage ferritique ODS incluant du chrome, ainsi qu'un procédé de fabrication d'un alliage martensitique ODS incluant du chrome, qui ne présentent pas les inconvénients précités et qui permettent notamment une maîtrise et un contrôle de la taille de grain de l'alliage fabriqué, notamment par une maîtrise des transformations de phase successives.

Le procédé selon l'invention de fabrication d'un alliage à structure ferritique ODS incluant du chrome, comprend une préparation d'une ébauche martensitique ODS incluant du chrome, et une étape consistant à soumettre l'ébauche martensitique ODS à au moins un cycle thermique, ledit, au moins un, cycle thermique comprenant une austénitisation de l'ébauche martensitique ODS à une température supérieure ou égale au point AC3 de cet alliage de manière à obtenir une austénite, suivie d'un refroidissement de cette austénite à une vitesse lente de refroidissement inférieure ou égale à la vitesse de refroidissement critique pour une transformation de cette austénite en ferrite de manière à obtenir un alliage à structure ferritique, ladite vitesse lente de refroidissement critique étant déterminée à partir d'un diagramme de transformation de phase de cette austénite sous refroidissement continu.

L'alliage fabriqué par le procédé de l'invention est amélioré notamment car il présente une matrice monophasée ferritique ayant une microstructure isotrope et une taille de grain suffisante pour garantir une résistance mécanique compatible avec une utilisation de cet alliage à haute température et/ou sous irradiation neutronique. De plus, il présente une ductilité suffisante pour être soumis à une mise en forme même à température ambiante.

Selon l'invention, l'ébauche martensitique ODS incluant du chrome peut être préparée par tout procédé permettant d'obtenir une ébauche dans laquelle les oxydes sont dispersés de manière fine et homogène dans la matrice métallique.

De manière avantageuse, l'ébauche peut être préparée à partir d'une poudre pré-alliée obtenue par mécanosynthèse. En effet, la mécanosynthèse permet la dispersion requise des oxydes tels que Y₂O₃ pour la préparation d'un alliage ODS.

La mécanosynthèse peut être réalisée dans un attriteur, sous atmosphère neutre, par exemple d'argon, à partir d'une poudre, obtenue par exemple par atomisation sous argon d'un lingot, ayant une composition qui correspond à celle de l'ébauche fabriquée, et en ajoutant les oxydes tels que Y₂O₃. La poudre peut aussi être obtenue par mélange de poudres pures ou pré-alliées disponibles dans le commerce.

Selon l'invention, l'ébauche martensitique ODS peut être préparée par une technique classique de consolidation d'une poudre pré-alliée par exemple par filage et mise en forme à chaud.

Selon l'invention, l'ébauche martensitique ODS incluant du chrome peut comprendre en outre un plusieurs éléments choisis dans le groupe comprenant Mo, W, Ni, Mn, Si, C, O, N, Y, Ti, Ta, V, Nb et Zr. Par exemple, elle peut comprendre un ou plusieurs des oxydes couramment utilisés pour fabriquer les alliages renforcés par dispersion d'oxydes, par exemple Y₂O₃, TiO₂, MgO, Al₂O₃, MgAl₂O₄, HfO₂, ThO₂ et ZrO₂. La fonction de chacun de ces éléments et oxydes dans l'ébauche martensitique ODS est connue de l'homme du métier, elle ne sera en conséquence pas décrite ici.

Selon l'invention, l'ébauche martensitique ODS incluant du chrome peut par exemple comprendre d'environ 7 à environ 12% en poids en chrome équivalent dans l'alliage, par exemple d'environ 8 à environ 11% en poids, c'est-à-dire une quantité d'éléments alphagènes équivalente à une quantité de chrome d'environ 7 à environ 12% en poids, par exemple d'environ 8 à environ 11% en poids. Les éléments alphagènes sont notamment des éléments qui permettent de diminuer l'étendue du domaine d'existence de l'austénite. Le procédé selon l'invention peut donc s'appliquer avantageusement sur un alliage de type 9 Cr.

Selon l'invention, le chrome peut être à une concentration d'environ 7 à environ 12% en poids, par exemple d'environ 8 à environ 12% en poids, Mo peut être à une concentration d'environ 0,3 à environ 1,5% en poids, W peut être à une concentration d'environ 0,5 à environ 3% en poids, Ni peut être à une concentration allant jusqu'à environ 1% en poids, Mn peut être à une concentration allant jusqu'à 1% en poids, Si peut être à une concentration allant jusqu'à environ 1% en poids, C peut être à une concentration d'environ 0,02 à environ 0,2% en poids, O peut être à une concentration de 0,02 à environ 0,3% en poids, N peut être à une concentration allant jusqu'à environ 0,15% en poids, Y peut être à une concentration allant jusqu'à environ 1% en poids et Ti peut être à une concentration allant jusqu'à environ 1% en poids dans l'alliage, le reste étant du fer.

Selon l'invention, cet alliage peut aussi comprendre Ta et Nb, chacun à une concentration allant jusqu'à environ 0,2% en poids, V à une concentration allant jusqu'à environ 0,4% en poids, et Zr à une concentration allant jusqu'à environ 0,4% en poids.

Le, au moins un, cycle thermique selon l'invention permet d'induire dans l'ébauche martensitique ODS une transformation de la martensite en austénite, puis une transformation lente de l'austénite en ferrite avec une croissance de grain stable à basse température.

Selon l'invention, le, au moins un, cycle thermique comprend une austénitisation de l'ébauche martensitique ODS à une température supérieure ou égale au point AC3 de cet alliage de manière à obtenir une austénite. Le point AC3 d'un tel alliage correspond à la température à laquelle la ferrite achève de se transformer en austénite au cours du chauffage. Lorsque l'alliage est un alliage tel que ceux décrits précédemment, cette austénitisation peut par exemple être effectuée à une température d'environ 950 à environ 1150°C par exemple à une température d'environ 1000 à 1100°C, par exemple à une température d'environ 1000°C et pendant une durée d'environ 15 à 120 minutes, par exemple d'environ 30 à 90 minutes, par exemple d'environ 30 minutes. Une durée inférieure à 15 minutes étant souvent insuffisante pour obtenir une structure austénitique, et une durée supérieure à 120 minutes n'étant pas nécessaire car la structure austénitique est souvent obtenue plus tôt.

Selon cette invention, cette austénitisation est suivie d'un refroidissement de l'austénite obtenue, à une vitesse lente de refroidissement inférieure ou égale à la vitesse de refroidissement critique pour une transformation de cette austénite en ferrite, ladite vitesse lente de refroidissement étant déterminée à partir d'un diagramme de transformation de phase de cette austénite sous refroidissement continu. Ce diagramme de transformation de phase, ou TRC, peut être obtenu d'une manière classique.

La vitesse de refroidissement de l'austénite est dite "lente" dans la présente description afin de la différencier de la vitesse dite "rapide" de refroidissement pour une transformation martensitique décrite ci-après dans le procédé de fabrication d'un alliage martensitique ODS selon l'invention.

Ce refroidissement lent induit une transformation de la phase austénitique qui est une phase haute température, en phase ferritique plus propice que la martensite à la croissance de grains.

La vitesse lente de refroidissement peut par exemple être inférieure ou égale à 280°C par heure, par exemple pour une composition d'alliage telles que celles décrites précédemment. Par exemple pour au moins un cycle thermique, elle peut être inférieure à environ 250°C par heure, par exemple inférieure ou égale à environ 100°C par heure, par exemple inférieure ou égale à environ 20°C par heure. Il est à noter de plus que la vitesse de refroidissement dépend non seulement de la composition de l'alliage fabriqué, mais aussi de la température d'austénitisation de cet alliage. On comprendra aisément que suivant les contraintes de fabrication industrielles et suivant la composition de l'alliage, l'homme du métier peut adapter la température d'austénitisation, et les vitesses lentes de refroidissement du procédé de l'invention.

Les inventeurs ont constaté que lorsque la vitesse de refroidissement est inférieure à la vitesse critique de transformation de phase de l'austénite, il y a une croissance de la taille de grain dans l'alliage. Ils ont également constaté de manière surprenante que plus la vitesse de refroidissement est basse, plus la croissance de grain dans l'alliage est élevée.

Une très bonne croissance de grain a par exemple été observée par les inventeurs avec une vitesse de refroidissement d'environ 5 à environ 20°C par heure. Par exemple pour une composition d'alliage telle que celles décrites précédemment, une vitesse de refroidissement lente inférieure à 100°C par heure montre une croissance de la taille de grain dans l'alliage ferritique fabriqué telle que la taille moyenne de grain atteint 3 à 8 µm dans cet alliage.

Ce refroidissement peut être contrôlé, par exemple jusqu'à 650°C pour les compositions précitées, c'est-à-dire jusqu'à la température à laquelle la transformation de phase est terminée.

Dans cet exemple, au dessous de 650°C, un refroidissement rapide peut être appliqué.

Après un premier cycle thermique selon l'invention, l'ébauche martensitique ODS est transformée en un alliage à structure ferritique ODS avec une taille de grain supérieure à l'ancien grain d'austénite.

Selon l'invention, le cycle thermique peut être répété plusieurs fois, avec des vitesses lentes de refroidissement identiques ou différentes, ce qui permet d'obtenir une croissance additionnelle de la taille de grain de l'alliage à structure ferritique ODS formé au cours d'un premier cycle. Il peut être répété jusqu'à ce que cette croissance cesse, c'est-à-dire jusqu'à une optimisation de la taille de grain de l'alliage ODS. Selon l'invention, le cycle thermique peut être par exemplre répété deux, trois ou quatre fois avec une composition de l'alliage telle que celles précédemment citées, l'optimisation étant obtenue au bout de quatre cycles dans cet exemple.

Par exemple, pour une composition d'alliage telle que celle décrite précédemment, et pour un seul cycle comprenant un refroidissement à une vitesse lente de refroidissement d'environ 6°C par heure, l'alliage ferritique fabriqué selon l'invention peut comprendre une taille moyenne de grain environ égale à 8 µm. Par exemple pour une même composition d'alliage et pour un tel cycle répété 4 fois, l'alliage ferritique fabriqué selon l'invention peut comprendre une taille moyenne de grain allant jusqu'à environ 10 µm et même plus.

Le procédé de l'invention permet donc d'obtenir une structure ferritique optimisée à gros grains.

Selon une première variante du procédé de l'invention, le procédé de fabrication d'un alliage à structure ferritique ODS incluant le chrome peut comprendre au moins deux cycles thermiques selon l'invention, lesdits cycles thermiques étant séparés par au moins un traitement de mise en forme de l'alliage à structure ferritique ODS obtenu.

D'une part, et comme décrit précédemment, le cycle thermique selon l'invention permet une croissance de la taille de grain de l'alliage. D'autre part, ce, au moins un, cycle thermique permet d'obtenir une structure ferritique ODS qui permet, notamment par sa ductilité, la faisabilité du traitement mise en forme selon la variante du procédé de l'invention. En effet, ce, au moins un, cycle thermique permet, par exemple avec un alliage ayant une composition telle que celles précitées, d'obtenir une dureté inférieure ou égale à 240.

Le traitement de mise en forme selon l'invention peut comprendre une mise en forme de l'alliage ferritique ODS, et éventuellement un traitement thermique de détentionnement de cet alliage. La mise en forme de l'alliage ferritique ODS peut être par exemple un filage, un martelage, un étirage, un laminage, et de manière générale toute mise en forme permettant de former par exemple des tôles, des tubes ou d'autres éléments à partir de cet alliage à une température allant par exemple jusqu'à 800°C. Cette mise en forme peut par exemple être réalisée par étirage ou laminage pour former des tubes de gaine de combustible nucléaire. Selon l'invention, l'alliage à structure ferritique ODS fabriqué est suffisamment ductile pour être mis en forme à froid.

Ainsi, grâce au procédé de la présente invention, la mise en forme peut par exemple être réalisée à une température ambiante.

Selon l'invention, le traitement de mise en forme peut comprendre en outre un traitement thermique de détensionnement de l'alliage mis en forme, à une température inférieure à AC1.

Ce traitement thermique de détensionnement peut être par exemple un traitement classique d'adoucissement d'un alliage. Il permet notamment une relaxation des contraintes résiduelles après mise en forme de l'alliage, sans évolution de la structure de celui-ci.

La température AC1 est la température à laquelle l'austénite commence à se former au cours d'un chauffage. Par exemple, dans le cas d'une composition d'alliage telle que celles précédemment décrites, ACl est égale à 775°C. Aussi, dans cet exemple, le traitement thermique d'adoucissement peut être réalisé à une température inférieure à environ 775°C par exemple à une température allant d'environ 720 à environ 750°C.

Selon l'invention, le traitement thermique de détensionnement peut être réalisé pendant une durée d'environ 15 à environ 120 minutes, par exemple pendant une durée d'environ 60 minutes.

Cette étape intermédiaire de mise en forme de l'alliage ferritique ODS permet donc d'obtenir un alliage formé, par exemple en tube ou en tôle, ayant une structure ferritique avec une taille de grains supérieure ou égale à environ 1 µm, par exemple d'environ 3 µm pour une composition d'alliage telle que celles décrites précédemment.

Selon l'invention, cet alliage de structure ferritique ODS ayant subi le, au moins un, de mise en forme peut alors être soumis à au moins un cycle thermique selon l'invention, pour optimiser la taille de grain de sa structure, par exemple jusqu'à environ 10 µm dans l'exemple précédent.

Avantageusement, selon le procédé de l'invention, le, au moins un, traitement de mise en forme de l'alliage ferritique ODS obtenu peut être un cycle thermique comprenant une vitesse lente de refroidissement, par exemple d'environ 50 à environ 250°C par heure, et le, au moins un, cycle thermique qui suit le traitement de mise en forme de l'alliage peut comprendre une vitesse lente de refroidissement encore plus lente, par exemple d'environ 20 à environ 5°C par heure. Ainsi, le, au moins un, cycle qui précède la mise en forme de l'alliage permet de former rapidement un alliage ferritique ductile, et le, au moins un, cycle thermique qui suit la mise en forme permet une optimisation de la taille de grain de l'alliage.

Selon un exemple de réalisation de cette première variante du procédé de l'invention, une ébauche martensitique ODS ayant une composition telle que celles citées précédemment peut être soumise par exemple à un premier cycle thermique selon l'invention avec une vitesse lente de refroidissement d'environ 100°C par heure pour obtenir un alliage ductile à structure ferritique ODS ayant une taille moyenne de grain environ égale à 3 µm. L'alliage ductile peut ensuite être mis en forme par un ou plusieurs traitements de mise en forme comprenant par exemple une mise en forme à froid et un traitement d'adoucissement, typiquement pendant une heure à 720-750°C. L'alliage formé peut alors être soumis à un ou plusieurs cycles thermiques avec une vitesse lente de refroidissement d'environ 10°C par heure pour optimiser la taille de grain de cet alliage, par exemple à quatre cycles thermiques dans cet exemple.

Cet exemple de réalisation permet par exemple de fabriquer un alliage formé ayant une structure ferritique optimisée à gros grains, ayant une taille d'environ 10 µm.

L'invention se rapporte également à un procédé de fabrication d'un alliage martensitique ODS incluant du chrome, ledit procédé comprenant un procédé de fabrication d'un alliage à structure ferritique ODS selon l'invention, suivi d'une étape de transformation martensitique et d'un revenu de l'alliage martensitique ODS fabriqué, ladite étape de transformation martensitique comprenant une austénitisation dudit alliage à structure ferritique ODS, à une température supérieure ou égale au point AC3 de cet alliage de manière à obtenir une austénite, suivie d'un refroidissement à une vitesse rapide de refroidissement supérieure ou égale à la vitesse de refroidissement critique pour une transformation de l'austénite en martensite, ladite vitesse rapide de refroidissement étant déterminée à partir d'un diagramme de transformation de phase de cet alliage sous refroidissement continu.

Ce procédé selon l'invention permet d'obtenir, à partir d'un alliage ayant une structure ferritique ODS telle que celle décrite précédemment, un alliage à structure martensitique ODS à gros grains. Le passage à une structure ferritique ODS selon l'invention permet une mise en forme de l'alliage même à température ambiante.

Selon l'invention, l'austénitisation de l'alliage à structure ferritique à gros grains à une température supérieure ou égale au point AC3 peut être telle que celle décrite précédemment.

Selon l'invention, la vitesse de refroidissement critique pour une transformation de l'austénite en martensite peut être déterminée à partir d'un diagramme TRC tel que celui précédemment décrit. Cette vitesse est dite "rapide" dans la présente description pour la raison énoncée précédemment. Cette vitesse rapide peut être par exemple supérieure ou égale à environ 700°C par heure pour une composition telle que celles décrites précédemment.

Selon l'invention, le revenu peut être un traitement classique de revenu, par exemple un revenu réalisé à une température d'environ 750°C pendant environ 1 heure. Il permet un détensionnement de la structure.

Ce procédé permet de fabriquer un alliage martensitique ODS ayant une microstructure isotrope et une taille moyenne de grain suffisante pour garantir une résistance mécanique compatible avec une utilisation de cet alliage à haute température, par exemple supérieure à 400°C par exemple entre 400 et 700°C et/ou sous irradiation neutronique. Cette taille moyenne de grain est équivalente à celle obtenue dans la structure ferritique ODS par le procédé de la présente invention.

Ce procédé permet donc par exemple de fabriquer un alliage pour constituer des composants de centrale nucléaire soumis à des températures élevées et/ou sous irradiation neutronique, par exemple des tubes de gaines de combustible nucléaire. Mais il ne se limite pas à la fabrication de ces composants, il permet aussi de fabriquer de manière générale tout composant soumis dans leur fonction à de fortes contraintes mécaniques et thermiques, par exemple des aubes de turbine dans l'aéronautique, des composants de centrale thermique, des éléments utilisés dans l'industrie du verre, du gaz, etc...

Aussi, l'invention se rapporte également à un alliage à structure ferritique ODS incluant du chrome, ou à structure martensitique ODS incluant du chrome, pouvant être fabriqué par le procédé de l'invention, ayant une taille moyenne de grain supérieure à 1 µm, à un tel alliage ayant une taille moyenne de grain supérieure à 5 µm, ainsi qu'à un alliage ayant une taille moyenne de grain allant jusqu'à environ 10 µm ou plus.

Selon l'invention, cet alliage à structure ferritique ODS ou martensitique ODS peut être par exemple choisi à partir du groupe comprenant un alliage 9 Cr, un alliage 9 Cr-Mo, un alliage 9 Cr-W ou un alliage 9 Cr-Mo-W. Les alliages de type 9 Cr-W sont dits "alliages à faible activation" car ils comportent des éléments à période de décroissance radioactive courte. Ces alliages, conformes à la présente invention, sont donc intéressants notamment pour fabriquer des éléments utilisés dans des centrales nucléaires.

Selon l'invention, ces alliages peuvent comprendre en outre par exemple au moins un élément choisi dans le groupe comprenant Cr, Mo, W, Ni, Mn, Si, C, O, N, Y et Ti, Ta, V, Nb, Zr. La concentration de chacun de ces éléments dans l'alliage peut être celle décrite précédemment dans le procédé selon l'invention.

L'alliage selon l'invention peut donc être par exemple utile pour fabriquer une gaine de combustible nucléaire, et de manière générale des composants tels que ceux décrits précédemment.

Les alliages de la présente invention sont notamment très résistants mécaniquement et chimiquement à haute température et/ou sous irradiation neutronique. Ils présentent de plus une structure isotrope à gros grains et une quantité réduite de chrome.

D'autres avantages et caractéristiques de la présente invention apparaîtront encore à la lecture de la description qui suit, donnée bien entendu à titre illustratif et non limitatif en référence aux figures annexées.

### Brève description des figures

- la figure 1 est un graphique illustrant des cycles thermiques utilisant différentes vitesses de refroidissement pour induire une transformation d'une austénite en ferrite,
- la figure 2 est un graphique illustrant l'évolution de la taille moyenne de grain en fonction de la vitesse de refroidissement,
- la figure 3 est un graphique illustrant plusieurs application d'un cycle thermique avec une vitesse de refroidissement de 6°C par heure,
- la figure 4 est un graphique illustrant l'évolution de la taille moyenne des grains et de la dureté en fonction du nombre de cycles thermiques montrés sur la figure 3.

### Exemple 1 : Préparation d'alliages ferritiques-martensitiques et exemples d'alliages Fe -9 Cr -1 Mo

Les alliages fabriqués dans cet exemple, selon le procédé de l'invention, sont des alliages de type 9 Cr-1 Mo base fer par la suite nommé EM10, renforcés par des particules d'oxyde d'yttrium.

Chacun de ces alliages est fabriqué par un procédé de mécanosynthèse. Un lingot ayant la composition de l'alliage souhaitée est atomisé sous argon de manière à obtenir une poudre pré-alliée 9 Cr-1 Mo. Cette poudre pré-alliée est broyée et mélangée à l'oxyde d'yttrium (Y₂O₃) sous forme de poudre dans un attriteur sous atmosphère d'argon, puis la poudre résultante est compactée par filage à chaud à une température de 1100°C avec un rapport de filage compris entre 15 et 30 pour obtenir une ébauche martensitique comprenant du chrome renforcée par la dispersion des particules d'oxyde.

Plusieurs alliages sont fabriqués. La composition chimique de ces alliages est indiquée dans le tableau 1 suivant. Lorsque l'alliage contient des oxydes dispersés tels que Y₂O₃, ceux-ci sont ajoutés lors de la mécanosynthèse lorsque la poudre pré-alliée est broyée dans l'attriteur. Ces alliages sont ci-après nommés EM10+Y₂O₃-ODS et EM10+Y₂O₃+Ti-ODS. L'alliage ne contenant pas d'oxyde est nommé ci-après EM10 atomisé.

Le tableau 1 suivant indique également la composition d'un alliage conventionnel EM10, c'est-à-dire d'un alliage obtenu par un procédé autre qu'une mécanosynthèse, par exemple par un procédé par fusion et la composition d'un alliage de type à dispersion d'oxydes Fe-13 Cr disponible dans le commerce, dénommé ci-après alliage ODS-MA957 (marque déposée) de la société INCO ALLOYS (Etats-Unis).

**Tableau 1 :**

| **Composition chimique d'alliages selon l'invention, d'un alliage conventionnel et d'un alliage ODS-MA957** | | | | | | | | | | |
|---|---|---|---|---|---|---|---|---|---|---|
| Matériaux | Cr | Mo | Ni | Mn | Si | C | O | N | Y | T₁ |
| EM10 conventionnel | 9,0 | 1,1 | 0,6 | 0,6 | 0,4 | 0,11 | <0,004 | 0,025 | | |
| EM10 atomisé | 8,50 | 1,00 | 0,53 | 0,47 | 0,37 | 0,088 | 0,019 | 0,015 | - | - |
| EM10+Y₂O₃-ODS | 8,40 | 1,14 | 0,53 | 0,49 | 0,37 | 0,103 | 0,129 | 0,025 | 0,17 | - |
| EM10+Y₂O₃+TiO₂-ODS | 8,38 | 1,13 | 0,52 | 0,50 | 0,37 | 0,122 | 0,133 | 0,024 | 0,15 | 0,23 |
| ODS-MA957 | 12,6 | 0,3 | - | - | - | 0,012 | 0,18 | - | 0,18 | 0,88 |

Les températures AC1 et AC3 de l'alliage ODS-EM10+Y₂O₃ dont la composition est donnée dans le tableau 1, sont comprises respectivement dans les gammes 775-800°C et 815-840°C.

Un diagramme de phase de transformation sous refroidissement continu (TRC) obtenu après austénitisation à 1000°C pendant 30 minutes de cet alliage EM10+Y₂O₃-ODS a permis de déterminer des vitesses de refroidissement critiques pour l'obtention d'un produit totalement martensitique, notées ci-après Vr(m), supérieures ou égales à 700°C par heure, et des vitesses de refroidissement critiques pour une transformation totale de l'austénite en ferrite, ou ferrite (α) notées ci-après Vr(α), inférieures ou égales à 280°C par heure.

Des valeurs de dureté caractéristiques de cet alliage EM10+Y₂O₃-ODS de structure ferritique ou martensitique obtenu selon le procédé de l'invention ont été mesurées. Pour l'alliage de structure ferritique, la dureté, notée ci-après HV(α), est inférieure ou égale à 244, et pour l'alliage de structure martensite, la dureté, notée ci-après HV(m), est supérieure ou égale à 460.

### Exemple 2 : effet de la vitesse de refroidissement selon l'invention sur la taille des grains de l'alliage EM10+Y₂O₃-ODS de structure ferritique

Dans cet exemple, l'alliage fabriqué est un alliage de structure ferritique.

Une série d'essais sont réalisés à partir d'une ébauche martensitique EM10+Y₂O₃-ODS ayant la concentration décrite dans le tableau 1 pour mesurer l'effet de la vitesse de refroidissement sur la taille des grains de l'alliage fabriqué.

Quatre échantillons de l'alliage EM10+Y₂O₃-ODS ont été soumis à un premier cycle thermique selon l'invention, comprenant une austénitisation à une température de 1000°C pendant 30 minutes suivie d'un refroidissement à une vitesse différente pour chaque échantillon jusqu'à 650°C, et d'un refroidissement rapide à une vitesse commune de 3°C par seconde à partir de 650°C.

Le tableau 2 suivant présente les vitesses de refroidissement de chaque échantillon notés E₁, E₂, E₃ et E₄, jusqu'à 650°C.

**Tableau 2 :**

| **cycle thermique utilisant différentes vitesses de refroidissement après austénitisation** | |
|---|---|
| **Echantillon** | **Vitesse de refroidissement jusqu'à 650°C (en °C/h)** |
| E₁ | 100 |
| E₂ | 20 |
| E₃ | 10 |
| E₄ | 6 |

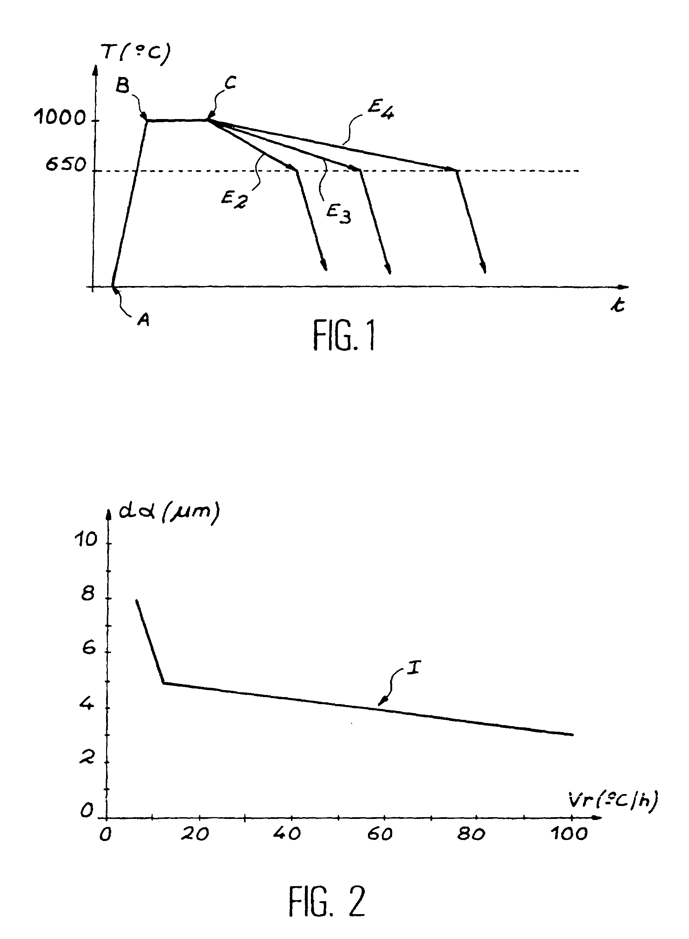

La figure 1 est un graphique illustrant les cycles thermiques de E₂, E₃ et E₄ réalisés dans cet exemple.

Sur cette figure, la ligne notée A-B-C illustre l'austénitisation de l'ébauche martensitique, obtenue par mécanosynthèse EM10+Y₂O₃-ODS, par chauffage jusqu'à 1000°C (ligne A-B), puis maintient de l'alliage à cette température pendant 30 minutes (ligne B-C). Cette dernière température correspondant à une température supérieure au point AC3 de l'alliage.

Les courbes E₂, E₃ et E₄ représentent respectivement les vitesses de refroidissement des échantillons E₂, E₃ et E₄ qui sont différentes jusqu'à 650°C, puis identiques à partir de cette température.

La taille de grain des échantillons a été mesurée par une technique d'analyse d'images, en fonction de la vitesse de refroidissement qui les caractérise chacun.

Le tableau 3 suivant regroupe les résultats de ces mesures.

**Tableau 3 :**

| **effet de la vitesse de refroidissement selon l'invention sur la taille de grain lors de la transformation de l'austénite en ferrite ODS** | | | | |
|---|---|---|---|---|
| Vitesse de refroidissement Vr en °C/h | 100 | 20 | 12 | 6 |
| Taille des grains α (µm) | 3 | 4,2 | 4,9 | 8 |

La figure 2 est un graphique illustrant l'effet de la vitesse de refroidissement selon l'invention sur la taille de grain de l'alliage fabriqué, en particulier, la courbe référencée I est une représentation graphique des valeurs du tableau 3 ci-dessus.

Ces résultats montrent que plus la vitesse de refroidissement selon l'invention est petite, plus la croissance de la taille de grain de l'alliage est grande.

Ces résultats sont à comparer avec une taille de grain de l'ordre de 1 µm ou moins obtenue après un traitement classique de l'alliage ODS-EM10+Y₂O₃ quelle que soit la température utilisée dans une gamme de 1000 à 1250°C suivi d'un refroidissement rapide.

### Exemple 3 : répétition d'un cycle thermique selon l'invention sur un alliage de structure ferritique ODS

Cet exemple est réalisé sur un alliage EM10+Y₂O₃-ODS tel que celui décrit dans le tableau 1 ci-dessus.

Un cycle thermique avec un refroidissement lent est appliqué de manière répétée sur cet alliage, de manière à mesurer l'effet de cette répétition sur la taille de grain de l'alliage.

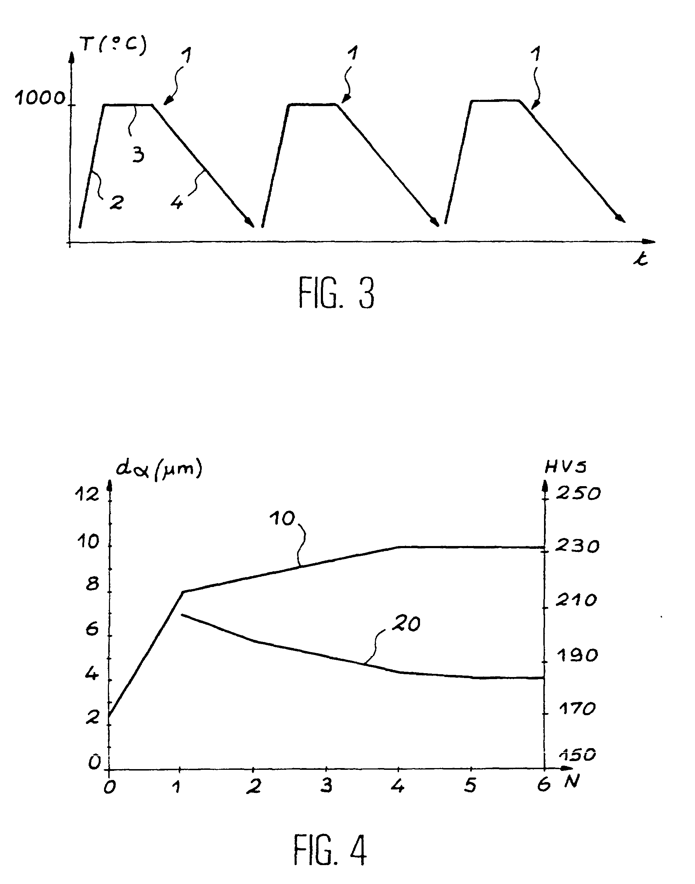

La figure 3 illustre schématiquement cet exemple 3, la référence 1 indiquant un cycle thermique lent. Ce cycle thermique comprend une austénitisation qui consiste à chauffer l'alliage à une température de 1000°C, indiqué par la référence 2, et à maintenir l'alliage à cette température pendant 30 minutes, indiqué par la référence 3 ; puis à refroidir cet alliage à une vitesse lente de 6°C/h, indiqué par la référence 4. Sur cette figure, ce cycle est répété 3 fois.

Des mesures de la taille moyenne de grain déterminée par une technique d'analyse d'images montrent que la répétition du cycle thermique selon l'invention induit une croissance additionnelle du grain de l'alliage. De plus, des mesures de la dureté de l'alliage en fonction du nombre de cycle thermique auquel il est soumis montrent que la dureté de l'alliage diminue avec le nombre de cycles thermiques. Le tableau 4 suivant regroupe ces mesures.

**Tableau 4 :**

| **Mesures de la taille de grain et de la dureté de l'alliage en fonction du nombre de cycles thermiques auquel il est soumis** | | | | | | | |
|---|---|---|---|---|---|---|---|
| Nombre de cycles N | 0 | 1 | 2 | 3 | 4 | 5 | 6 |
| Taille de grain α (µm) | 2,5 | 8 | 8,5 | 9 | 10 | 10 | 10 |
| Dureté HV(α) | - | 208 | 195 | 190 | 187 | 185 | 185 |

La figure 4 illustre les résultats de ce tableau. Sur cette figure, la courbe référencée 10 représente l'évolution de la taille moyenne de grain de l'alliage en fonction du nombre de cycles thermiques appliqués à cet alliage, et la courbe référencée 20 représente l'évolution de la dureté de l'alliage en fonction du nombre de cycles thermiques appliqués à cet alliage.

Ces résultats montrent que la croissance additionnelle du grain de l'alliage se sature au bout de quatre cycles thermiques selon l'invention (courbe 10) et que la dureté de l'alliage diminue à chaque application d'un cycle thermique selon l'invention (courbe 20) et se stabilise également au bout de quatre cycles. La taille de grain atteinte est 10 µm avec six cycles selon l'invention et la dureté de l'alliage est 185 avec ce même nombre de cycles.

### Exemple 4 : Obtention d'une structure martensitique ODS selon l'invention

Une structure martensitique ODS est obtenue à partir d'une structure ferritique ODS ayant une taille de grain de 8 µm, fabriquée dans l'exemple précédent. La structure ferritique est soumise à un traitement thermique selon l'invention comprenant une austénitisation à une température d'environ 1000°C pendant 30 minutes suivie d'un refroidissement rapide à une vitesse supérieure à Vr(m), dans cet exemple à une vitesse de 700°C/h.

Le procédé de l'invention permet d'obtenir un alliage ayant une matrice à structure monophasée martensitique avec des longueurs de lattes bien plus importantes que celles obtenues après une austénitisation d'une structure brute de filage de l'alliage EM10+Y₂O₃-ODS. Le passage par une structure ferritique ODS à gros grains permet d'augmenter la taille de grain de l'ancien grain d'austénite, c'est-à-dire la taille de grain de la phase haute température qui définie la longueur de lattes de la phase martensitique.

Une observation au microscope électronique en transmission a permis de vérifier que la distribution des particules d'oxyde Y₂O₃ n'est pas modifiée par le procédé de l'invention.

D'autre part, la microstructure de l'alliage fabriqué par le procédé de l'invention caractérisée par la présence de grains équiaxes, est isotrope aussi bien sur des coupes parallèles que perpendiculaires par rapport à la direction de filage de barres fabriquées à partir de cet alliage.

Le procédé de l'invention permet donc d'assurer la disparition de l'anisotropie présente dans des alliages fabriqués selon l'art antérieur, et de garantir un comportement mécanique équivalent quelle que soit la direction de sollicitation de l'alliage. L'alliage martensitique fabriqué selon l'invention a une dureté supérieure ou égale à 300 après austénitisation et revenu.

Ainsi, selon l'application qui est faite de l'alliage fabriqué selon le procédé de l'invention, cet alliage peut être utilisé en phase ferritique ou en phase martensitique revenue.

### Exemple 5 : Effet de la taille de grain sur les propriétés de traction des alliages martensitiques EM10+Y₂O₃-ODS

Les alliages fabriqués dans l'exemple 4 ci-dessus ont été soumis à des mesures de résistance à la traction à haute température. Ces mesures ont été réalisées à 650 et 750°C, sur des barres façonnées ayant différentes tailles de l'ancien grain austénitique.

Le tableau 5 suivant regroupe les mesures de cet exemple. Dans ce tableau, Rp_{0,2%} représente la limite d'élasticité à 0,2% et Rₘ représente la résistance maximale à la traction. L'alliage ODS-MA957 a été recristallisé, c'est-à-dire qu'il a subi un traitement thermique spécifique pour améliorer sa résistance mécanique à chaud. Les valeurs des mesures de cet alliage correspondent à des mesures faites suivant une direction parallèle à l'axe de façonnage des tubes ou des barres là où, du fait de son anisotropie, la résistance mécanique présente des valeurs maximales obtenues pour l'alliage ODS-MA957.

**Tableau 5 :**

| **mesures de résistance à la traction à haute température** | | | | |
|---|---|---|---|---|
| Matériaux | 650°C | | 750°C | |
| | Rp0,2% (MPa) | Rₘ (MPa) | Rp0,2% (MPa) | Rₘ (MPa) |
| EM10 conventionnel sans dispersion d'oxydes | 190 | 223 | - | - |
| EM10+Y₂O₃-ODS taille de grain ≤1 µm | 233 | 285 | 117 | 152 |
| EM10+Y₂O₃-ODS selon l'invention | 305 | 331 | 188 | 205 |
| ODS-MA957 recristallisé∗ | 290 | 295 | 180 | 190 |

Ces valeurs montrent que l'alliage ODS-EM10+Y₂O₃ martensitique selon l'invention a des caractéristiques mécaniques à chaud meilleures que l'alliage ODS-MA957 de l'art antérieur, ce dernier présentant par ailleurs les inconvénients précités d'anisotropie et de fragilisation sous irradiation neutronique.

### Exemple d'application

Le procédé revendiqué dans ce brevet s'applique directement à la fabrication de tubes pouvant servir par exemple au gainage de combustibles pour un réacteur à neutrons rapides classique ou des futures générations de réacteurs hybrides, pour lesquels il est demandé un matériau présentant une très forte résistance à l'irradiation neutronique dans l'intervalle 400-700°C. Contrairement aux aciers austénitiques utilisés actuellement comme matériaux de référence, par exemple les aciers austénitiques de type 15-15Ti, les alliages martensitiques ODS revendiqués dans ce brevet peuvent supporter les fortes doses requises de radiations neutroniques, supérieures à 200 dpa.

Le procédé de fabrication selon l'invention peut s'appliquer à la fabrication de structures plus épaisses que des gaines. En particulier, l'alliage martensitique ODS revendiqué peut convenir dans toutes les applications nucléaires nécessitant de bonnes propriétés mécaniques sous irradiation neutronique, par exemple pour la visserie interne d'un réacteur à eau pressurisée et pour une structure fortement sollicitée d'un réacteur à fusion.

Pour toutes ces applications, on peut envisager d'autres compositions chimiques basées sur les matériaux 9 Cr-Mo et les variantes dites "à faible activation" type 9 Cr-W sans s'écarter de la portée des revendications en annexe.

Enfin, hors du domaine nucléaire, les alliages ferritiques-martensitiques ODS selon l'invention conviennent à toute application nécessitant une résistance mécanique élevée à haute température notamment pour fabriquer un composant d'une centrale thermique et dans l'industrie du verre, du gaz et de l'aéronautique.

## Revendications

1. Procédé de fabrication d'un alliage à structure ferritique ODS incluant du chrome, ledit procédé comprenant une préparation d'une ébauche martensitique ODS incluant du chrome, et une étape consistant à soumettre l'ébauche martensitique ODS à au moins un cycle thermique, ledit, au moins un, cycle thermique comprenant une austénitisation de l'ébauche martensitique ODS à une température supérieure ou égale au point AC3 de cet alliage de manière à obtenir une austénite, suivie d'un refroidissement de cette austénite à une vitesse lente de refroidissement inférieure ou égale à la vitesse de refroidissement critique pour une transformation de cette austénite en ferrite de manière à obtenir un alliage à structure ferritique ODS, ladite vitesse lente de refroidissement critique étant déterminée à partir d'un diagramme de transformation de phase de cette austénite sous refroidissement continu.

2. Procédé selon la revendication 1, dans lequel l'ébauche martensitique ODS incluant du chrome comprend en outre un ou plusieurs membres du groupe comprenant Y₂O₃, TiO₂, MgO, Al₂O₃, MgAl₂O₄, HfO₂, ThO₂ et ZrO₂

3. Procédé selon la revendication 1, dans lequel l'ébauche martensitique ODS incluant du chrome comprend en outre un ou plusieurs éléments choisis dans le groupe comprenant Mo, W, Ni, Mn, Si, C, O, N, Y, Ti, Ta, V, Nb et Zr.

4. Procédé selon l'une quelconque des revendications 1 à 3, dans lequel l'ébauche martensitique ODS incluant du chrome comprend d'environ 7 à environ 12% en poids en chrome équivalent dans l'alliage.

5. Procédé selon la revendication 3, dans lequel Cr est à une concentration d'environ 7 à environ 12% en poids, Mo est à une concentration d'environ 0,3 à environ 1,5% en poids, W est à une concentration d'environ 0,5 à environ 3% en poids, Ni est à une concentration allant jusqu'à environ 1% en poids, Mn est à une concentration allant jusqu'à environ 1% en poids, Si est à une concentration allant jusqu'à environ 1% en poids, C est à une concentration d'environ 0,02 à environ 0,2% en poids, O est à une concentration d'environ 0,02 à environ 0,3% en poids, N est à une concentration allant jusqu'à environ 0,15% en poids, Y est à une concentration allant jusqu'à environ 1% en poids et Ti est à une concentration allant jusqu'à environ 1% en poids dans l'alliage, le reste étant du fer.

6. Procédé selon l'une quelconque des revendications 1 à 5, comprenant au moins deux cycles thermiques, lesdits cycles thermiques étant séparés au moins une fois par au moins un traitement de mise en forme de l'alliage à structure ferritique ODS obtenu.

7. Procédé selon la revendication 6, dans lequel le traitement de mise en forme de l'alliage à structure ferritique ODS comprend une mise en forme de l'alliage à structure ferritique suivie d'un traitement thermique de détensionnement de l'alliage mis en forme à une température inférieure à ACl.

8. Procédé selon la revendication 7, dans lequel la mise en forme dudit alliage est une mise en forme à froid.

9. Procédé selon la revendication 7 ou 8, dans lequel le traitement de détensionnement est un traitement thermique d'adoucissement à une température inférieure à environ 775°C.

10. Procédé selon l'une quelconque des revendications 1 à 9, dans lequel la vitesse lente de refroidissement d'au moins un cycle thermique est inférieure ou égale à environ 280°C par heure.

11. Procédé selon l'une quelconque des revendications 1 à 10, dans lequel la vitesse lente de refroidissement d'au moins un cycle thermique d'au moins un cycle thermique est inférieure ou égale à environ 100°C par heure.

12. Procédé selon l'une quelconque des revendications 1 à 11, dans lequel la vitesse lente de refroidissement d'au moins un cycle thermique est inférieure ou égale à environ 20°C par heure.

13. Procédé de fabrication d'un alliage martensitique ODS comprenant du chrome, ce procédé comprenant un procédé de fabrication d'un alliage à structure ferritique ODS selon l'une quelconque des revendications 1 à 12, suivi d'une étape de transformation martensitique, et d'un revenu de l'alliage martensitique ODS fabriqué, ladite étape de transformation martensitique comprenant une austénitisation de l'alliage à structure ferritique ODS à une température supérieure ou égale au point AC3 de cet alliage de manière à obtenir une austénite, suivie d'un refroidissement de cette austénite à une vitesse rapide de refroidissement, supérieure ou égale à la vitesse de refroidissement critique pour une transformation de l'austénite en martensite, ladite vitesse rapide de refroidissement étant déterminée à partir d'un diagramme de transformation de phase de cet alliage sous refroidissement continu

14. Procédé selon la revendication 13, dans lequel la vitesse rapide de refroidissement est supérieure ou égale à environ 700°C par heure.

15. Procédé selon la revendication 13 ou 14, dans lequel le revenu est réalisé à une température d'environ 750°C pendant environ 1 heure.

16. Procédé selon l'une quelconque des revendications 2 à 15, dans lequel l'austénitisation est réalisée à une température d'environ 1000 à environ 1250°C pendant une durée d'environ 15 à environ 120 minutes.

17. Procédé selon l'une quelconque des revendications précédentes, dans lequel l'austénitisation est réalisée à une température d'environ 1000°C pendant une durée d'environ 30 minutes.

18. Procédé selon l'une quelconque des revendications précédentes, dans lequel la préparation de l'ébauche martensitique ODS comprenant du chrome est réalisée par mécanosynthèse d'une poudre pré-alliée obtenue par atomisation sous argon d'un lingot ayant une composition correspondante à celle de l'alliage fabriqué et ajout des oxydes.

19. Procédé de fabrication d'une gaine de combustible nucléaire comprenant un alliage à structure ferritique ODS incluant du chrome, ledit procédé comprenant un procédé de fabrication dudit alliage selon l'une quelconque des revendications 1 à 18.

20. Alliage à structure ferritique ODS comprenant du chrome susceptible d'être obtenu par le procédé selon la revendication 1, ledit alliage ayant une structure isotrope et une taille moyenne de grains supérieure à 1 µm.

21. Alliage à structure martensitique ODS comprenant du chrome susceptible d'être obtenu par le procédé selon la revendication 13, ledit alliage ayant une structure isotrope et une taille moyenne de grains supérieure à 1 µm.

22. Alliage selon la revendication 20 ou 21 ayant une taille moyenne de grain allant jusqu'à environ 10 µm.

23. Alliage selon l'une quelconque des revendications 20 à 22, ledit alliage étant choisi à partir du groupe comprenant un alliage 9 Cr, un alliage 9 Cr-Mo, un alliage 9 Cr-W, ou un alliage 9 Cr-Mo-W.

24. Alliage selon l'une quelconque des revendications 20 à 23, ledit alliage comprenant en outre au moins un élément choisi dans le groupe comprenant Cr, Mo, W, Ni, Mn, Si, C, O, N, Y, Ti, Ta, V, Nb et Zr.

25. Alliage selon la revendication 24, dans lequel Cr est à une concentration d'environ 7 à environ 12% en poids, Mo est à une concentration d'environ 0,3 à environ 1,5% en poids, Ni est à une concentration allant jusqu'à environ 1% en poids, Mn est à une concentration allant jusqu'à environ 1% en poids, Si est à une concentration allant jusqu'à environ 1% en poids, C est à une concentration d'environ 0,02 à environ 0,2% en poids, O est à une concentration d'environ 0,02 à environ 0,3% en poids, N est à une concentration allant jusqu'à environ 0,15% en poids, Y est à une concentration allant jusqu'à environ 1% en poids et Ti est à une concentration allant jusqu'à environ 1% en poids dans l'alliage, le reste étant du fer.

26. Gaine de combustible nucléaire constituée d'un alliage selon l'une quelconque des revendications 20 à 25.

27. Elément de centrale nucléaire résistant à une radiation neutronique et à une température allant d'environ 400 à environ 700°C constitué d'un alliage selon l'une quelconque des revendications 20 à 25.

28. Elément résistant à une température supérieure à environ 400°C constitué d'un alliage selon l'une quelconque des revendications 20 à 25.

## Patentansprüche

1. Verfahren zur Herstellung einer Oxid-dispersionsgehärteten (ODS)-Legierung mit Ferritstruktur (Ferritgefüge), die Chrom enthält, wobei das Verfahren umfasst die Herstellung eines martensitischen ODS-Rohlings, der Chrom enthält, und eine Stufe, die darin besteht, dass der martensitische ODS-Rohling mindestens einem thermischen Behandlungscyclus unterworfen wird, der umfasst eine Austenitisierung des martensitischen ODS-Rohlings bei einer Temperatur ≥ dem AC3-Punkt dieser Legierung, sodass man einen Austenit erhält, woran sich eine Abkühlung dieses Austenits mit einer niedrigen Abkühlungsgeschwindigkeit anschließt, die niedriger als oder gleich ist der kritischen Abkühlungsgeschwindigkeit für eine Umwandlung dieses Austenits in Ferrit, sodass man eine ODS-Legierung mit Ferrit-Struktur (Ferritgefüge) erhält, wobei die kritische niedrige Abkühlungsgeschwindigkeit bestimmt wird anhand eines Phasenumwandlungsdiagramms dieses Austenits bei kontinuierlicher Abkühlung.

2. Verfahren nach Anspruch 1, bei dem der Chrom enthaltende martensitische ODS-Rohling außerdem einen oder mehrere Vertreter umfasst, die ausgewählt werden aus der Gruppe, die umfasst Y₂O₃, TiO₂, MgO, Al₂O₃, MgAl₂O₄, HfO₂, ThO₂ und ZrO₂.

3. Verfahren nach Anspruch 1, bei dem der Chrom enthaltende martensitische ODS-Rohling außerdem ein oder mehrere Elemente, ausgewählt aus der Gruppe Mo, W, Ni, Mn, Si, C, O, N, Y, Ti, Ta, V, Nb und Zr, umfasst.

4. Verfahren nach einem der Ansprüche 1 bis 3, bei dem der Chrom enthaltende martensitische ODS-Rohling etwa 7 bis etwa 12 Gew.-% eines Chromäquivalents in der Legierung umfasst.

5. Verfahren nach Anspruch 3, bei dem Cr in einer Konzentration von etwa 7 bis etwa 12 Gew.-%, Mo in einer Konzentration von etwa 0,3 bis etwa 1,5 Gew.-%, W in einer Konzentration von etwa 0,5 bis etwa 3 Gew.-%, Ni in einer Konzentration bis zu etwa 1 Gew.-%, Mn in einer Konzentration von bis zu etwa 1 Gew.-%, Si in einer Konzentration von bis zu etwa 1 Gew.-%, C in einer Konzentration von etwa 0,02 bis etwa 0,2 Gew.-%, O in einer Konzentration von etwa 0,02 bis etwa 0,3 Gew.-%, N in einer Konzentration von bis zu etwa 0,15 Gew.-%, Y in einer Konzentration von bis zu etwa 1 Gew.-% und Ti in einer Konzentration von bis zu etwa 1 Gew.-% in der Legierung vorliegen, wobei der Rest Eisen ist.

6. Verfahren nach einem der Ansprüche 1 bis 5, das mindestens zwei thermische Behandlungszyklen umfasst, die mindestens einmal durch mindestens eine Behandlung zum Formen der erhaltenen ODS-Legierung mit Ferritstruktur (Ferritgefüge) voneinander getrennt sind.

7. Verfahren nach Anspruch 6, bei dem die Behandlung zum Formen der ODS-Legierung mit Ferritstruktur (Ferritgefüge) das Formen der Legierung mit Ferritstruktur und eine sich daran anschließende thermische Entspannungsbehandlung der geformten Legierung bei einer Temperatur unterhalb des AC1-Punktes umfasst.

8. Verfahren nach Anspruch 7, bei dem das Formen der Legierung ein Kaltverformen ist.

9. Verfahren nach Anspruch 7 oder 8, bei dem die Entspannungsbehandlung eine thermische Entfestigungs-Behandlung (weichmachende Behandlung) bei einer Temperatur unterhalb etwa 775 °C ist.

10. Verfahren nach einem der Ansprüche 1 bis 9, bei dem die niedrige Abkühlungsgeschwindigkeit mindestens eines thermischen Behandlungscyclus ≤ etwa 280 °C/h beträgt.

11. Verfahren nach einem der Ansprüche 1 bis 10, bei dem die niedrige Abkühlungsgeschwindigkeit mindestens eines thermischen Behandlungscyclus ≤ etwa 100 °C/h beträgt.

12. Verfahren nach einem der Ansprüche 1 bis 11, bei dem die niedrige Abkühlungsgeschwindigkeit mindestens eines thermischen Behandlungscyclus ≤ etwa 20 °C/h beträgt.

13. Verfahren zur Herstellung einer Chrom enthaltenden martensitischen ODS-Legierung, das umfasst die Herstellung einer ODS-Legierung mit Ferrit-Struktur (Ferritgefüge) nach einem der Ansprüche 1 bis 12, woran sich eine Stufe zur martensitischen Umwandlung und das Anlassen der gebildeten martensitischen ODS-Legierung anschließen, wobei die Stufe der martensitischen Umwandlung eine Austenitisierung der ODS-Legierung mit Ferrit-Struktur (Ferritgefüge) bei einer Temperatur ≥ dem AC3-Punkt dieser Legierung umfasst zur Bildung eines Austenits, woran sich ein Abkühlen dieses Austenits mit einer hohen Abkühlungsgeschwindigkeit anschließt, die gleich der oder höher ist als die kritische Abkühlungsgeschwindigkeit für eine Umwandlung von Austenit in Martensit, wobei die hohe Abkühlungsgeschwindigkeit bestimmt wird anhand eines Phasenumwandlungsdiagramms dieser Legierung bei kontinuierlicher Abkühlung.

14. Verfahren nach Anspruch 13, bei dem die hohe Abkühlungsgeschwindigkeit ≥ etwa 700 °C/h beträgt.

15. Verfahren nach Anspruch 13 oder 14, bei dem das Anlassen (Aushärten) bei einer Temperatur von etwa 750 °C etwa 1 h lang durchgeführt wird.

16. Verfahren nach einem der Ansprüche 2 bis 15, bei dem die Austenitisierung bei einer Temperatur von etwa 1000 bis etwa 1250 °C für eine Zeitspanne von etwa 15 bis etwa 120 min durchgeführt wird.

17. Verfahren nach einem der vorhergehenden Ansprüche, bei dem die Austenitisierung bei einer Temperatur von etwa 1000 °C für eine Zeitspanne von etwa 30 min durchgeführt wird.

18. Verfahren nach einem der vorhergehenden Ansprüche, bei dem die Herstellung des Chrom enthaltenden martensitischen ODS-Rohlings durchgeführt wird durch mechanische Synthese eines vorlegierten Pulvers, das durch Zerstäuben eines Blockes hergestellt worden ist, der eine Zusammensetzung hat, die derjenigen der hergestellten Legierung entspricht, und Zugabe von Oxiden.

19. Verfahren zur Herstellung einer Kernbrennstoff-Hülse, die eine Chrom enthaltende ODS-Legierung mit Ferritstruktur (Ferritgefüge) umfasst, wobei das Verfahren die Herstellung der Legierung nach einem der Ansprüche 1 bis 18 umfasst.

20. ODS-Legierung mit Ferritstruktur (Ferritgefüge), die Chrom enthält und nach dem Verfahren nach Anspruch 1 herstellbar ist, wobei diese Legierung eine isotrope Struktur und eine mittlere Korngröße von > 1 µm aufweist.

21. ODS-Legierung mit Martensitstruktur (Martensitgefüge), die Chrom enthält und nach dem Verfahren nach Anspruch 13 herstellbar ist, wobei die Legierung eine isotrope Struktur und eine mittlere Korngröße von > 1 µm aufweist.

22. Legierung nach Anspruch 20 oder 21, die eine mittlere Korngröße aufweist, die bis zu etwa 10 µm beträgt.

23. Legierung nach einem der Ansprüche 20 bis 22, die ausgewählt ist aus der Gruppe, die umfasst eine 9 Cr-Legierung, eine 9 Cr-Mo-Legierung, eine 9 Cr-W-Legierung oder eine 9 Cr-Mo-W-Legierung.

24. Legierung nach einem der Ansprüche 20 bis 23, die außerdem mindestens ein Element umfasst, das ausgewählt ist aus der Gruppe, die umfasst Cr, Mo, W, Ni, Mn, Si, C, O, N, Y, Ti, Ta, V, Nb und Zr.

25. Legierung nach Anspruch 24, in der Cr in einer Konzentration von etwa 7 bis etwa 12 Gew.-%, Mo in einer Konzentration von etwa 0,3 bis etwa 1,5 Gew.-%, Ni in einer Konzentration von bis zu etwa 1 Gew.-%, Mn in einer Konzentration von bis zu etwa 1 Gew.-%, Si in einer Konzentration von bis zu etwa 1 Gew.-%, C in einer Konzentration von etwa 0,02 bis etwa 0,2 Gew.-%, O in einer Konzentration von etwa 0,02 bis etwa 0,3 Gew.-%, N in einer Konzentration von bis zu etwa 0,15 Gew.-%, Y in einer Konzentration von bis zu etwa 1 Gew.-% und Ti in einer Konzentration von bis zu etwa 1 Gew.-% in der Legierung vorliegen, wobei der Rest Eisen ist.

26. Kernbrennstoff-Hülse, die besteht aus einer Legierung nach einem der Ansprüche 20 bis 25.

27. Kernreaktor-Element, das gegenüber Neutronenstrahlung und gegenüber einer Temperatur von etwa 400 bis etwa 700 °C beständig ist, das besteht aus einer Legierung nach einem der Ansprüche 20 bis 25.

28. Element, das gegenüber einer Temperatur von mehr als etwa 400 °C beständig ist, das besteht aus einer Legierung nach einem der Ansprüche 20 bis 25.

## Claims

1. A method of manufacturing an alloy with a ferritic ODS structure that includes chromium, said method comprising preparation of a martensitic ODS blank that includes chromium and a step consisting of subjecting the martensitic ODS blank to at least one thermal cycle, said, at least one thermal cycle comprising an austenitization of the martensitic ODS blank at a temperature greater than or equal to the AC3 point of this alloy in such a way as to obtain an austenite, followed by cooling of this austenite at a slow cooling rate that is less than or equal to the critical cooling rate for transformation of this austenite into ferrite in such a way as to obtain an alloy with a ferritic ODS structure, said slow critical cooling rate being determined from a phase transformation diagram for this austenite under continuous cooling.

2. A method according to Claim 1, in which the martensitic ODS blank that includes chromium includes, in addition, one or more members of the group comprising Y₂O₃, TiO₂, MgO, Al₂O₃, MgAl₂O₄, HfO₂, ThO₂ and ZrO₂.

3. A method according to Claim 1, in which the martensitic ODS blank that includes chromium includes, in addition, one or more elements chosen from the group comprising Mo, W, Ni, Mn, Si, C, O, N, Y, Ti, Ta, V, Nb, Zr.

4. A method according to any one of Claims 1 to 3, in which the martensitic ODS blank that includes chromium comprises from about 7 to about 12% by weight of chromium equivalent in the alloy.

5. A method according to Claim 3, in which chromium is at a concentration of from about 7 to about 12% by weight, Mo is at a concentration of from about 0.3 to about 1.5% by weight, W is at a concentration of from about 0.5 to about 3% by weight, Ni is at a concentration ranging up to about 1% by weight, Mn is at a concentration ranging up to about 1% by weight, Si is at a concentration ranging up to about 1% by weight, C is at a concentration of from about 0.02 to about 0.2% by weight, O is at a concentration of from about 0.02 to about 0.3% by weight, N is at a concentration ranging up to about 0.15% by weight, Y is at a concentration ranging up to about 1% by weight and Ti is at a concentration ranging up to about 1% by weight in the alloy, the remainder being iron.

6. A method according to any one of Claims 1 to 5, comprising at least two thermal cycles, said thermal cycles being separated at least once, by at least one forming treatment of the alloy obtained with a ferritic ODS structure.

7. A method according to Claim 6, in which the forming treatment of the alloy with a ferritic ODS structure comprises forming the alloy with a ferritic structure followed by a thermal stress relieving treatment of the alloy formed at a temperature lower than ACl.

8. A method according to Claim 7, in which the forming of said alloy is a cold forming.

9. A method according to Claim 7 or 8, in which the stress relieving treatment is a thermal softening treatment at a temperature below about 775°C.

10. A method according to any one of Claims 1 to 9, in which the slow cooling rate of at least one thermal cycle is less than or equal to about 280°C per hour.

11. A method according to any one of Claims 1 to 10, in which the slow cooling rate of at least one thermal cycle is less than or equal to about 100°C per hour.

12. A method according to any one of Claims 1 to 11, in which the slow cooling rate of at least one thermal cycle is less than or equal to about 20°C per hour.

13. A method of manufacturing a martensitic ODS alloy that includes chromium, this method comprising a method of manufacturing an alloy with a ferritic ODS structure according to any one of Claims 1 to 12, followed by a martensitic transformation step and a tempering of the manufactured martensitic ODS alloy, said martensitic transformation step comprising an austenitization of the alloy with a ferritic ODS structure at a temperature greater than or equal to the AC3 point of this alloy in such a way as to obtain an austenite, followed by cooling of this austenite at a fast rate of cooling greater than or equal to the critical cooling rate for transformation of austenite into martensite, said fast rate of cooling being determined from a phase transformation diagram for this alloy under continuous cooling.

14. A method according to Claim 13, in which the fast rate of cooling is greater than or equal to about 700°C per hour.

15. A method according to claim 13 or 14, in which the tempering is carried out at a temperature of about 750°C for about 1 hour.

16. A method according to any one of claims 2 to 15, in which the austenitization is carried out at a temperature of from about 1000°C to about 1250°C for a period of from about 15 minutes to about 120 minutes.

17. A method according to any one of the preceding claims, in which the austenitization is carried out at a temperature of about 1000°C for a period of about 30 minutes.

18. A method according to any one of the preceding claims, in which the preparation of the martensitic ODS blank that includes chromium is carried out by mechanical alloying of a pre-alloyed powder obtained by atomization under argon of an ingot, that has a composition corresponding to that of the manufactured alloy and adding oxides.

19. A method of manufacturing a nuclear fuel cladding comprising an alloy with a ferritic ODS structure that includes chromium, said method comprising a method of manufacturing said alloy according to any one of claims 1 to 18.

20. An alloy having a ferritic ODS structure including chromium, obtainable by the process according to claim 1, said alloy having an isotropic structure and a mean grain size greater than 1 µm.

21. An alloy with a martensitic ODS structure including chromium obtainable by the process according to claim 13, said alloy having an isotropic structure and a mean grain size greater than 1 µm.

22. An alloy according to claim 20 or 21 having a mean grain size up to approximately 10 µm.

23. An alloy according to any one of the claims 20 to 22, said alloy being chosen from the group including a 9 Cr alloy, a 9 Cr-Mo alloy, a 9 Cr-W alloy or a 9 Cr-Mo-W alloy.

24. An alloy according to any one of the claims 20 to 23, said alloy also including at least one element chosen from within the group including Cr, Mo, W, Ni, Mn, Si, C, O, N, Y, Ti, Ta, V, Nb and Zr.

25. An alloy according to claim 24, wherein Cr has a concentration from approximately 7 to approximately 12 wt.%, Mo a concentration of approximately 0.3 to approximately 1.5 wt.%, Ni a concentration up to approximately 1 wt.%, Mn a concentration up to approximately 1 wt.%, Si a concentration up to approximately 1 wt.%, C a concentration of approximately 0.02 to approximately 0.2 wt.%, 0 a concentration of approximately 0.02 to approximately 0.3 wt.%, N a concentration up to approximately 0.15 wt.%, Y a concentration up to approximately 1 wt.% and Ti a concentration up to approximately 1 wt.% in the alloy, the remainder being iron.

26. A nuclear fuel cladding constituted by an alloy according to any one of the claims 20 to 25.

27. A nuclear power station component able to resist neutron radiation and a temperature from approximately 400 to approximately 700°C constituted by an alloy according to any one of the claims 20 to 25.

28. Component able to resist a temperature exceeding approximately 400°C and constituted by an alloy according to any one of the claims 20 to 25.
